# EUROPEAN PATENT SPECIFICATION

(11) **EP 3 051 542 B1**
(45) Date of publication and mention of the grant of the patent: **28.06.2017**
(21) Application number: 15153447.6
(22) Date of filing: 02.02.2015
(51) Int. Cl.: H01B 12/06

(54) **High temperature superconductor cable**
Hochtemperatur-Supraleiterkabel
Câble supraconducteur à haute température

(43) Date of publication of application: 03.08.2016
(73) Proprietor: HTS-powercables.nl B.V., 7335 DS Apeldoorn (NL)
(72) Inventor: Chevtchenko, Oleg Alexander, 2901 HG Capelle aan den IJssel (NL); Bakker, Ralph, 7335 DS Apeldoorn (NL)
(74) Representative: 't Jong, Bastiaan Jacob

(56) References cited:
- EP-A1- 0 807 938
- US-A- 4 036 618
- US-A1- 2002 134 574
- 0. CHEVTCHENKO: "Low friction cryostat for HTS power cable of Dutch project", PHYSICS PROCEDIA, vol. 36, 2012, pages 1309-1312, XP002742323,

## Description

The invention relates to a high temperature superconductor cable having in longitudinal direction alternating rigid zones and flexible zones and comprising:
- at least one phase former providing a first channel for the coolant;
- at least one electrical protection layer of a conductor, such as copper, arranged in or on the at least one phase former;
- at least one layer of high temperature superconductor tapes enveloping the electrical protection layer and the phase former
- at least one electrical insulation layer enveloping the at least one layer of high temperature superconductor tapes, wherein the phase former, the electrical protection layer, the superconductor tapes and the electrical insulation layer form one phase of the cable;
- cryostat means enveloping the at least one phase of the cable and providing a third channel therebetween.

Such a high temperature superconductor cable is for example known from O. Chevtchenko, e. a.,"Low friction cryostat for HTS power cable of Dutch project", Physics Procedia, 2012, vol. 36, 1309-1312. In this article it is described that the cryostat was manufactured from alternating straight rigid sections and corrugated flexible sections. In the described test a flexible dummy high temperature superconductor (HTS) cable was inserted into this cryostat and sub-cooled liquid nitrogen was circulated in the annulus between the dummy cable surface and the inner cryostat surface. This resulted in a lower pressure drop making longer cables possible.

However, the flexible along the whole cable length dummy HTS core mentioned in this article is not a real HTS core. If such a cable core would be used, for example one known from US2002134574, then the build-up of layers within the cable core needs to be designed to provide a cable core flexible over its full length. A cable core typically has at least a phase former, which is enveloped by one or more layers of high temperature superconductor tapes and one or more insulation layers respectively separating electrically one or more phases of the cable. Furthermore, a HTS cable is known that contains more than one (e.g., two, three) electrical phases placed in the same cryostat means.

To achieve the desired flexibility of the cable phases, for mechanical reasons there needs to be a spacing between adjacent HTS tapes in the same layer as well as the electrical insulation layer needs to be flexible.

However, increasing the spacing of the HTS tapes results in higher AC losses of the cable core. Also, a thermal multilayer insulation (inside a cryostat means) when operated around a flexible tube, has 2-3 times lower efficiency as when operated around a rigid tube at other conditions being the same. Furthermore, a coolant pressure drop along a flexible tube is 3-5 times higher as compared to the same along a rigid tube with a smooth surface at other conditions being the same.

It is an object of the invention to reduce the above mentioned disadvantages.

This object is achieved with a high temperature superconductor cable according to the preamble, which is characterized in that the spacing between the adjacent high temperature superconductor tapes in a layer is smaller at the rigid zones than the spacing between the adjacent high temperature superconductor tapes in a layer at the flexible zones. In the proposed invention all components of the HTS cable have in longitudinal direction alternating rigid zones and flexible zones mutually aligned with each other, wherein the spacing between the adjacent high temperature superconductor tapes in a layer is smaller at the rigid zones than the spacing between the high temperature superconductor tapes in a layer at the flexible zones. Said rigid and flexible zones are respectively e.g., 10 and 0.2 m (or 15 and 0.3 m) long, though other length combinations are possible.

At the rigid zones of the cable, by having the spacing between HTS tapes in a layer smaller, the AC losses are minimized, by operating thermal multilayer insulation on a rigid surface the cryostat heat leaks are reduced and by using smooth channel surfaces coolant pressure drops are minimized, while at the flexible zones, the additional AC loss, the cryostat heat leaks and pressure drops are either accepted in exchange for the desired flexibility, or where appropriate mitigated (e.g., at the flexible zones as compared to the rigid zones: the additional AC loss is reduced by stepping up the critical current; the additional heat leaks in a cryostat are reduced by using more efficient thermal multilayer insulation; the pressure drops are reduced by smoothening the inner corrugated surface of the coolant channel in the flexible zones with liners).

By having the flexible zones as short as possible and the rigid zones as long as possible, a HTS cable is provided according to the invention, which has sufficient flexibility, while AC losses in the cable core, heat leaks in the cryostat and coolant pressure drops along the cable are minimized.

For a person skilled in the art, it is clear what is to be understood under rigid zones and flexible zones. Rigid zones are zones of the cable which are designed to keep their dimensions and shape, while flexible zones are clearly designed to flex and make it possible to change the shape of such a zone and provide a bend or a straight (rigid) portion in the HTS cable of the invention.

Preferably, the spacing between the adjacent high temperature superconductor tapes in a layer at the rigid zones is minimized, typically about 50 µm or less between their superconductors. As the HTS tapes at the rigid zones do not need to contribute to flexibility, the spacing could be virtually none. However, in practice there will always be some spacing. So, minimizing the spacing results in minimized AC losses of layers for the rigid zones.

In a preferred embodiment of the cable according to the invention the spacing between the high temperature superconductor tapes in a layer at the flexible zones is at least 2 times the spacing between the high temperature superconductor tapes in a layer at the rigid zones.

By providing at the flexible zones a spacing between the HTS tapes in a layer at least 3 times larger than at the rigid zones, sufficient flexibility is provided to the phase former and enveloping HTS tapes to be functional in a cable according to the invention.

In yet another embodiment of the cable according to the invention the bending radius of each flexible zone is at least 5 times smaller than the bending radius of each rigid zone.

In a further embodiment of the cable according to the invention the electrical insulation layer is wound on a separate former enveloping the at least one layer of high temperature superconductor tapes, providing the channel therebetween and flexibility of the said former and of the electrical insulation layer at the rigid zones is not higher than the flexibility of the said former and the insulation layer at the flexible zones.

Use of a separate former for the electrical insulation layer diminishes thermo-mechanical stresses (arising e.g., due to cooling/warming of HTS cable and caused by the mismatch in their thermal contraction/elongation properties) from the relatively massive electrical insulation layer (e.g., 10-30 mm thick) to the relatively fragile layer of HTS tapes (each HTS tape is just 50-200 µm thick). Furthermore, it allows for more flexibility in maintenance or upgrade: e.g., a HTS layer can be taken out of the electrical insulation layer when needed: e.g., for repair or for replacement of aged HTS tapes with modern HTS tapes.

By having different flexibility of the said separate former and the electrical insulation layer along the length of the cable and as a result a different insulation, the electrical insulation layer can be tuned to the flexible and rigid zones of the cable according to the invention.

A further embodiment of the invention further comprising a holder around which the electrical insulation layer is arranged, which holder envelops the at least one layer of high temperature superconductor tapes and wherein a second coolant channel is provided between the at least one layer of high temperature superconductor tapes and the holder.

Preferably, the holder introduces a substantial thermal resistance making the first and the second cooling channelsat least partly thermally independent from each other.

In yet another embodiment of the cable according to the invention three cable phases are provided being enveloped by a splitter layer, which is enveloped by the cryostat means, wherein the splitter layer separates the third channel into two channels which are at least partly thermal and hydraulically independent from each other.

In a further preferred embodiment of the cable according to the invention the wall of the cryostat means bordering the cylindrical third channel is corrugated (or made of bellows) at the flexible zones and the wall of the cryostat means bordering the cylindrical third channel is smooth at the rigid zones.

A corrugated or made of bellows inner wall of the cryostat means bordering the cylindrical third channel is necessary to provide flexibility at the flexible zones. However the said flexible wall provides also a substantial hydraulic resistance to the cooling liquid flowing along such wall. By having a smooth wall at the rigid zones, the flow resistance is minimized. Furthermore, where appropriate, said flexible walls are made hydraulically smooth using additional flexible liners (kept in place e.g., with wire or plastic rings). Where appropriate, the same approach is used for hydraulic smoothening of any flexible wall bordering any of the coolant channels of the proposed HTS cable. As a result a longer cable according to the invention is possible between two cooling stations, compared to a cable having over its full length a corrugated inner wall.

In yet another preferred embodiment of the cable according to the invention the critical currents measured at a fixed temperature (e.g., at 77 K and zero external magnetic field) of the high temperature superconductor tapes changes along the length of the cable and from layer to layer.

Because HTS cable preferably uses cooling stations located at the cable ends, temperature along the cable changes (e.g., between 64 and 77 K). In this temperature range the self-field critical current of e.g., YBCO tape changes about 1.6 times (e.g., from 160 to 100 A). It is of course possible to make a layer of HTS tapes all having the same critical current at 77 K, e.g., 100 A. It is more efficient however, as proposed in this invention, to select the HTS tapes so that along the cable length where the coolant temperature is 77 K the critical current of individual tape is 100 A, and where the temperature is 64 K, the critical current is also 100 A (and therefore the critical current at 77 K of individual tapes used at this location is 63 A). Furthermore, it is proposed in this invention to step other relevant properties (e.g., the critical current, tape and filament widths, transposition) of HTS tapes so that each individual tape has the same (comparable) desired AC loss level regardless its position in the cable phase. The tapes properties are stepped along the cable length in every HTS layer and from layer to layer so that the loss in any tape stays the same regardless operating temperature, magnetic field and the gap size. This approach allows generally using 35% less tapes and makes cooling of tapes uniform. Most natural way of doing so along the cable length is by changing critical currents of tapes to be soldered together (100-200 m is typical length of individual HTS tapes comprising the cable core that is 2-10 km long).

Preferably, with the cable according to the invention the increase of the critical current temperature of the high temperature superconductor tapes is stepped. In such an embodiment lengths of HTS tape with different critical currents are linked together along the cable length as explained by the proposed preferred method described below.

In a preferred method critical currents of individual tapes are selected to provide comparable (close to each other, or equal) level of AC losses in a HTS cable core and shield. To this end the temperature along the cable is calculated based on the acceptable level of AC losses and magnetic fields are calculated based on the desired current distribution in each tape layer. Using measured dependence of the critical current on magnetic field and temperature for each individual tape and e.g., calculated dependence of AC losses in the same tape on the critical current, the value of the critical current is selected as to provide the acceptable level of AC losses in the tapes (e.g., the same for all tapes comprising HTS cable core)

The cable according to the invention the phase former has a first channel. The second channel can be flowed through by a cooling liquid in the same direction as (and parallel to) the first channel will be flowed through. As a result, the HTS tapes will be sandwiched between two flows of cooling liquid of similar temperature. When the cooling liquid has reached the end of the cable it can return through the third channel.

Around the at least one layer of high temperature superconductor tapes enveloping the phase former a layer of electric insulation, such as a dielectric material, is arranged, which is in turn enveloped by a further at least one layer of high temperature superconductor tapes, in yet a further embodiment of the cable according to the invention.

With this arrangement two or more phases can be provided inside of one cryostat means and thus one cable.

In still another embodiment of the cable according to the invention, in the radial direction, at least inner and outer surfaces of the layers of high temperature superconducting tapes are comprised of REBCO tapes facing their substrate sides outwards and their superconductor sides inwards.

Preferably, the HTS tape layer has at least two layers of tapes facing each other by the superconductor sides, and not by the substrate sides.

These and other features of the invention will be elucidated in conjunction with the accompanying drawings.
Figure 1 shows a perspective view of an embodiment of a high temperature superconductor cable according to the invention.
Figure 2 shows a schematic side view of the embodiment of figure 1.
Figure 3 shows a cross sectional view of the cable of figure 1 and 2.

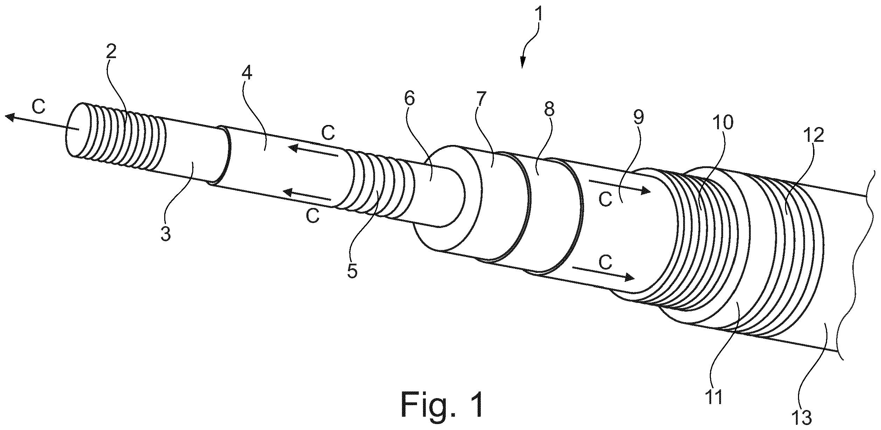

Figure 1 shows a perspective view of an embodiment 1 of a high temperature superconductor cable according to the invention. The embodiment 1 is a so-called single phase embodiment.

The cable 1 has a phase former 2 on which a protection layer is arranged, for example a copper layer 3. The former 2 with protection layer 3 is enveloped in high temperature superconductor tapes 4.

Around the HTS tapes 4 and spaced therefrom by optional spacers (not shown) is a second former 5, which is enveloped by a semi-conducting layer 6 covered by an electrical insulation layer 7.

The electrical insulation layer 7 is in turn enveloped by a second semi-conductor layer 8 and a copper or superconducting screen 9.

This assembly of layers 2 - 9 is inserted into a cryostat assembly 10 - 13. The cryostat assembly 10 - 13 has a partially corrugated along the length inner tube 10, a multilayer thermal insulation 11, a partially corrugated along the length outer tube 12 and a cable protection layer 13.

Coolant C will flow through the second annular channel between the HTS tapes 4 and second former 5, as well as through the first channel in the phase former 2, while return coolant C will flow in opposite direction through the third channel between the copper screen 9 and corrugated inner tube 10.

Clearly the corrugated inner and outer tubes 10, 12 are intended to be applied in a flexible zone of the cable 1.

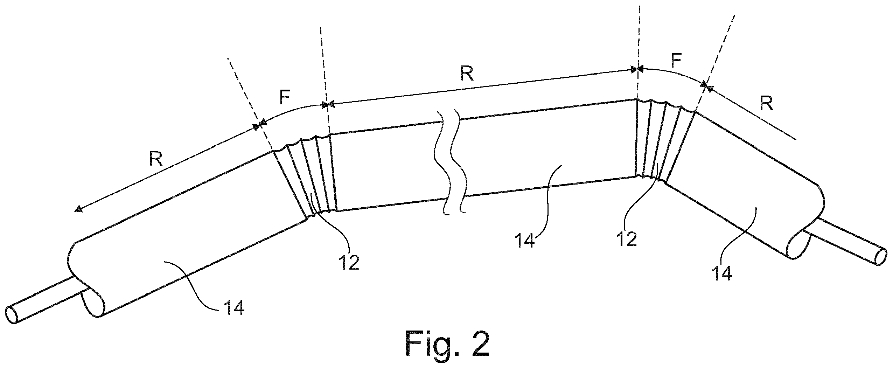

Figure 2 shows a schematic side view of the embodiment of figure 1.

The cryostat assembly 10 - 13 of the cable 1 has rigid zones R and flexible zones F. At the flexible zones F corrugated tubes (or bellows) 10, 12 are applied to allow bending of the cable, while at the rigid zones R smooth rigid tubes 14 are applied. As the rigid zones (R) are substantially longer than the flexible zones (F), the flow resistance due to the corrugated inner tubes 10 will be minimal.

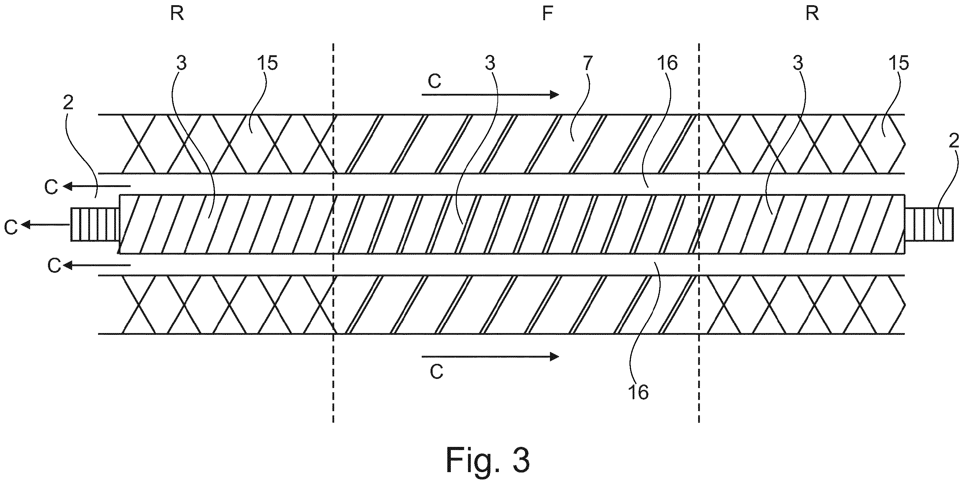

The inner cable assembly 2 - 9 will also have corresponding flexible and rigid zones. This is explained in the cross sectional view shown in figure 3.

For schematic purpose, not all layers 2 - 9 as shown in figure 1 are shown in figure 3.

Around the phase former 2 HTS tapes 3 are wrapped. In the rigid zones, the spacing between the HTS tapes 3 is minimized, such that the tapes 3 are virtually abutting. In the flexible zone F, the tapes 3 are positioned at a larger spacing, such that there is space when the cable 1 is bent.

Around and at distance of the tapes 3, such that a second channel 16 is formed through which coolant C flows, an electrical insulation 7, 8 is arranged. Again, in the flexible zone F, the electrical insulation 7 is flexible, while at the rigid zones the electrical insulation is less flexible, for example more compact, which provides a better insulation.

## Claims

1. High temperature superconductor cable having in longitudinal direction alternating rigid zones and flexible zones and comprising:
- at least one phase former (2) providing a first channel for the coolant;
- at least one electrical protection layer (3) of a conductor, such as copper, arranged in or on the at least one phase former;
- at least one layer of high temperature superconductor tapes (4) enveloping the electrical protection layer and the phase former
- at least one electrical insulation layer (7) enveloping the at least one layer of high temperature superconductor tapes, wherein the phase former, the electrical protection layer, the superconductor tapes and the electrical insulation layer form one phase of the cable;
- cryostat means enveloping the at least one phase of the cable and providing a third channel therebetween
**characterized in that** the spacing between the adjacent high temperature superconductor tapes in a layer is smaller at the rigid zones than the spacing between the adjacent high temperature superconductor tapes in a layer at the flexible zones.

2. Cable according to claim 1, wherein the spacing between the adjacent high temperature superconductor tapes in a layer at the rigid zones is minimized, typically to about 50 µm or less between their superconductors.

3. Cable according to claim 2, wherein the spacing between the adjacent high temperature superconductor tapes in a layer at the flexible zones is at least 2 times the spacing between the adjacent high temperature superconductor tapes in a layer at the rigid zones.

4. Cable according to any of the preceding claims, further comprising a holder around which the electrical insulation layer is arranged, which holder envelops the at least one layer of high temperature superconductor tapes and wherein a second coolant channel is provided between the at least one layer of high temperature superconductor tapes and the holder.

5. Cable according to claim 4, wherein the holder introduces a substantial thermal resistance making the first and the second cooling channelsat least partly thermally independent from each other.

6. Cable according to claims 1-3, wherein three cable phases are provided being enveloped by a splitter layer, which is enveloped by the cryostat means, wherein the splitter layer separates the third channel into two channels which are at least partly thermal and hydraulically independent from each other.

7. Cable according to any of the preceding claims, wherein the wall of the cryostat means bordering the third channel is corrugated or made of bellows at the flexible zones and wherein the wall of the cryostat means bordering the third channel is smooth at the rigid zones.

8. Cable according to claim 7, wherein the surfaces bordering the first, second and/or third channel(s) at the flexible zones are lined with flexible liners to provide a hydraulically smooth surface.

9. Cable according to any of the preceding claims, wherein the critical current of the high temperature superconductor tapes changes along the length of the cable.

10. Cable according to claim 9, wherein the increase of the critical current of the high temperature superconductor tapes is stepped.

11. Cable according to claim 10, wherein the increase of the critical current of the high temperature superconductor tapes provides comparable (close to each other, or equal) level of AC losses in each HTS tape

12. Cable according to any of the preceding claims, wherein stepping of the HTS tape properties (e.g., spacing between tapes, striation of tapes into filaments and transposition of filaments) differs between the rigid and flexible zones

13. Cable according to any of the preceding claims, wherein around the at least one layer of high temperature superconductor tapes enveloping the phase former a layer of electric insulation, such as a dielectric material, is arranged, which is in turn enveloped by a further at least one layer of high temperature superconductor tapes.

14. Cable according to any of the preceding claims, wherein, in the radial direction, at least inner and outer surfaces of the layers of high temperature superconducting tapes are comprised of REBCO tapes facing their substrate sides outwards and their superconductor sides inwards.

15. Cable according to claim 14, wherein the HTS tape layer has at least two layers of tapes facing each other by the superconductor sides, and not by the substrate sides.

## Patentansprüche

1. Hochtemperatursupraleiterkabel, das in der Längsrichtung sich abwechselnde starre Bereiche und biegsame Bereiche aufweist, und das Folgendes umfasst:
- mindestens einen Phasenbildner (2), der einen ersten Kanal für das Kältemittel bereitstellt;
- mindestens eine elektrische Schutzschicht (3) eines Leiters, wie zum Beispiel Kupfer, die in oder auf dem mindestens einen Phasenbildner angeordnet ist;
- mindestens eine Schicht aus Hochtemperatursupraleiterbändern (4), die die elektrische Schutzschicht und den Phasenbildner umhüllt;
- mindestens eine elektrische Isolierschicht (7), die die mindestens eine Schicht aus Hochtemperatursupraleiterbändern umhüllt, wobei der Phasenbildner, die elektrische Schutzschicht, die Supraleiterbänder und die elektrische Isolierschicht eine Phase des Kabels bilden;
- Kryostatmittel, die die mindestens eine Phase des Kabels umhüllen und einen dritten Kanal dazwischen bereitstellen;
**dadurch gekennzeichnet, dass**
der Abstand zwischen den benachbarten Hochtemperatursupraleiterbändern in einer Schicht an den starren Bereichen kleiner ist als der Abstand zwischen den benachbarten Hochtemperatursupraleiterbändern in einer Schicht an den biegsamen Bereichen.

2. Kabel nach Anspruch 1, wobei der Abstand zwischen den benachbarten Hochtemperatursupraleiterbändern in einer Schicht an den starren Bereichen minimiert ist, typischerweise auf ungefähr 50 µm oder weniger zwischen ihren Supraleitern.

3. Kabel nach Anspruch 2, wobei der Abstand zwischen den benachbarten Hochtemperatursupraleiterbändern in einer Schicht an den biegsamen Bereichen mindestens das Doppelte des Abstands zwischen den benachbarten Hochtemperatursupraleiterbändern in einer Schicht an den starren Bereichen beträgt.

4. Kabel nach einem der vorherigen Ansprüche, ferner umfassend eine Halterung, um welche die elektrische Isolierschicht angeordnet ist, wobei die Halterung die mindestens eine Schicht aus Hochtemperatursupraleiterbändern umhüllt, und wobei ein zweiter Kältemittelkanal zwischen der mindestens einen Schicht aus Hochtemperatursupraleiterbändern und der Halterung bereitgestellt ist.

5. Kabel nach Anspruch 4, wobei die Halterung einen wesentlichen Wärmewiderstand einführt, der den ersten und zweiten Kühlmittelkanal mindestens teilweise thermisch voneinander unabhängig macht.

6. Kabel nach den Ansprüchen 1-3, wobei drei Kabelphasen bereitgestellt sind, die von einer Teilerschicht umhüllt sind, welche von den Kryostatmitteln umhüllt ist, wobei die Teilerschicht den dritten Kanal in zwei Kanäle teilt, welche mindestens teilweise thermisch und hydraulisch voneinander unabhängig sind.

7. Kabel nach einem der vorherigen Ansprüche, wobei die Wand der Kryostatmittel, die an den dritten Kanal angrenzt, an den biegsamen Bereichen wellig ist oder aus Wellrohren hergestellt ist, und wobei die Wand der Kryostatmittel, die an den dritten Kanal angrenzt, an den starren Bereichen glatt ist.

8. Kabel nach Anspruch 7, wobei die Flächen, die an den ersten, zweiten und/oder dritten Kanal an den biegsamen Bereichen angrenzen, mit biegsamen Verkleidungen ausgekleidet sind, um eine hydraulisch glatte Fläche bereitzustellen.

9. Kabel nach einem der vorherigen Ansprüche, wobei sich der kritische Strom der Hochtemperatursupraleiterbänder entlang der Länge des Kabels ändert.

10. Kabel nach Anspruch 9, wobei die Verstärkung des kritischen Stroms der Hochtemperatursupraleiterbänder abgestuft ist.

11. Kabel nach Anspruch 10, wobei die Verstärkung des kritischen Stroms der Hochtemperatursupraleiterbänder vergleichbare (nahe beieinanderliegende oder gleiche) Stufen von Wechselstromverlusten in jedem HTS-Band bereitstellt.

12. Kabel nach einem der vorherigen Ansprüche, wobei sich die Abstufung der HTS-Band-Eigenschaften (z. B. der Abstand zwischen Bändern, die Streifenbildung von Bändern in Heizfäden und die Versetzung von Heizfäden) zwischen den starren und den biegsamen Bereichen unterscheidet.

13. Kabel nach einem der vorherigen Ansprüche, wobei um die mindestens eine Schicht aus Hochtemperatursupraleiterbändern, die den Phasenbilder umhüllt, eine elektrische Isolierschicht, wie zum Beispiel ein dielektrisches Material, angeordnet ist, welche wiederum von einer weiteren mindestens einen Schicht aus Hochtemperatursupraleiterbändern umhüllt ist.

14. Kabel nach einem der vorherigen Ansprüche, wobei in der radialen Richtung mindestens innere und äußere Flächen der Schichten aus Hochtemperatursupraleiterbändern aus REBCO-Bändern bestehen, die deren Substratseiten nach außen gegenüberliegen und deren Supraleiterseiten nach innen gegenüberliegen.

15. Kabel nach Anspruch 14, wobei die HTS-Band-Schicht mindestens zwei Schichten aus Bändern aufweist, die durch die Supraleiterseiten und nicht durch die Substratseiten einander gegenüberliegen.

## Revendications

1. Câble supraconducteur à haute température ayant dans la direction longitudinale des zones rigides et des zones flexibles alternées et comprenant :
- au moins un formateur de phase (2) fournissant un premier canal pour le réfrigérant ;
- au moins une couche de protection électrique (3) d'un conducteur, tel que du cuivre, agencée dans ou sur le au moins un formateur de phase ;
- au moins une couche de rubans supraconducteurs à haute température (4) enveloppant la couche de protection électrique et le formateur de phase ;
- au moins une couche isolante électrique (7) enveloppant la au moins une couche de rubans supraconducteurs à haute température, dans lequel le formateur de phase, la couche de protection électrique, les rubans supraconducteurs et la couche isolante électrique forment une phase du câble ;
- des moyens de cryostat enveloppant la au moins une phase du câble et fournissant un troisième canal entre eux,
**caractérisé en ce que**
l'espacement entre les rubans supraconducteurs à haute température adjacents dans une couche est inférieur dans les zones rigides à l'espacement entre les rubans supraconducteurs à haute température adjacents dans une couche dans les zones flexibles.

2. Câble selon la revendication 1, dans lequel l'espacement entre les rubans supraconducteurs à haute température adjacents dans une couche dans les zones rigides est minimisé typiquement à environ 50 µm ou moins entre leurs supraconducteurs.

3. Câble selon la revendication 2, dans lequel l'espacement entre les rubans supraconducteurs à haute température adjacents dans une couche dans les zones flexibles est d'au moins 2 fois l'espacement entre les rubans supraconducteurs à haute température adjacents dans une couche dans les zones rigides.

4. Câble selon l'une quelconque des revendications précédentes, comprenant en outre un support autour duquel la couche isolante électrique est agencée, lequel support enveloppe la au moins une couche de rubans supraconducteurs à haute température et dans lequel un deuxième canal de réfrigérant est aménagé entre la au moins une couche de rubans supraconducteurs à haute température et le support.

5. Câble selon la revendication 4, dans lequel le support introduit une résistance thermique sensible qui rend le premier et le deuxième canal de refroidissement au moins en partie thermiquement indépendants l'un de l'autre.

6. Câble selon les revendications 1 à 3, dans lequel trois phases de câble sont disposées enveloppées par une couche de division, qui est enveloppée par les moyens de cryostat, dans lequel la couche de division sépare le troisième canal en deux canaux qui sont au moins en partie indépendants aux plans thermique et hydraulique l'un de l'autre.

7. Câble selon l'une quelconque des revendications précédentes, dans lequel la paroi des moyens de cryostat bordant le troisième canal est ondulée ou constituée de soufflets dans les zones flexibles et dans lequel la paroi des moyens de cryostat bordant le troisième canal est lisse dans les zones rigides.

8. Câble selon la revendication 7, dans lequel les surfaces bordant le premier, le deuxième et/ou le troisième canal dans les zones flexibles sont garnies de garnitures flexibles pour fournir une surface hydrauliquement lisse.

9. Câble selon l'une quelconque des revendications précédentes, dans lequel le courant critique des rubans supraconducteurs à haute température change sur la longueur du câble.

10. Câble selon la revendication 9, dans lequel l'augmentation du courant critique des rubans supraconducteurs à haute température est graduée.

11. Câble selon la revendication 10, dans lequel l'augmentation du courant critique des rubans supraconducteurs à haute température fournit un niveau comparable (proche l'un de l'autre ou égal) de pertes de CA dans chaque ruban HTS.

12. Câble selon l'une quelconque des revendications précédentes, dans lequel la graduation des propriétés des rubans HTS (par exemple, l'espacement entre les rubans, la striation de rubans en filaments et la transposition de filaments) diffère entre les zones rigides et les zones flexibles.

13. Câble selon l'une quelconque des revendications précédentes, dans lequel autour de la au moins une couche de rubans supraconducteurs à haute température enveloppant le formateur de phase, on agence une couche d'isolant électrique, tel qu'un matériau diélectrique, qui est à son tour enveloppé par une autre au moins une couche de rubans supraconducteurs à haute température.

14. Câble selon l'une quelconque des revendications précédentes, dans lequel, dans la direction radiale, au moins des surfaces internes et externes des couches de rubans supraconducteurs à haute température sont constituées de rubans de REBCO en regard de leurs côtés de substrat vers l'extérieur et de leurs côtés supraconducteurs vers l'intérieur.

15. Câble selon la revendication 14, dans lequel la couche de rubans HTS a au moins deux couches de rubans en regard l'un de l'autre par les côtés supraconducteurs et non par les côtés de substrat.
